# EUROPÄISCHE PATENTANMELDUNG

(11) **EP 1 172 535 A2**
(43) Veröffentlichungstag der Anmeldung: **16.01.2002**
(21) Anmeldenummer: 01109634.4
(22) Anmeldetag: 19.04.2001
(51) Int. Cl.: F01N 7/16, F01N 3/02, F01N 5/02, F01N 7/18

(54) **Motor-Abgasanlage**

(30) Priorität: 15.07.2000 DE 10034556
(71) Anmelder: J. Eberspächer GmbH & Co., 73730 Esslingen (DE)
(72) Erfinder: Ackermann, Roland, 66538 Neunkirchen (DE); Hüther, Bernhard, 66111 Saarbrücken (DE); Adam, Tassilo, 66482 Zweibrücken (DE)

(57) **Zusammenfassung**

Eine Abgasanlage (1) eines Motors (2), vorzugsweise eines Verbrennungsmotors eines Kraftfahrzeuges, umfaßt zumindest einen Bereich (A), der aus Kunststoff gebildet ist. Dem Kunststoff-Bereich (A) der Abgasanlage (1) kann eine Reduzier-Einrichtung zur Herabsetzung der Abgastemperatur vorgeordnet sein.

## Beschreibung

Die Erfindung betrifft eine Abgasanlage eines Motors, vorzugsweise eines Verbrennungsmotors eines Kraftfahrzeuges.

Bekannte Abgasanlagen von Kraftfahrzeug-Verbrennungsmotoren bestehen aus Blechform- oder -ziehteilen der unterschiedlichsten Konfiguration. Die Herstellung ist entsprechend der individuellen Anlage mehr oder weniger aufwändig und kostenintensiv. Gleiches gilt für die Montage. Die Lebensdauer ist durch Korrosion begrenzt.

Der Erfindung liegt die Aufgabe zugrunde, eine Motor-Abgasanlage der eingangs genannten Art bereitzustellen, die einfach zu fertigen und zu montieren und gleichwohl zuverlässig im Betrieb und lange haltbar ist.

Diese Aufgabe wird durch den Gegenstand des unabhängigen Anspruchs gelöst. Vorteilhafte Weiterbildungen ergeben sich aus den Unteransprüchen.

Wesentlicher Aspekt der Erfindung ist, daß zumindest ein Bereich der Abgasanlage aus Kunststoff gebildet ist.

Vorzugsweise ist es der vom Motor entfernte hintere Bereich der Abgasanlage, der aus Kunststoff gebildet ist.

Dem Kunststoff-Bereich der Abgasanlage kann eine Reduzier-Einrichtung zur Herabsetzung der Abgastemperatur vorgeordnet sein.

Die Reduzier-Einrichtung ist vorzugsweise ein Abgastemperaturkühler.

Die Reduzier-Einrichtung kann aber auch grundsätzlich ein Wärmetauscher sein, der die Abgaswärme für ein Betriebssystem nutzt.

Das Betriebssystem ist insbesondere eine Zusatzheizung, vorzugsweise eines Kraftfahrzeuges.

Der Kunststoff-Bereich der Abgasanlage kann über eine abgasdichte Flanschverbindung mit dem Motor oder einem motornahen vorderen metallenen Abgasbereich der Abgasanlage verbunden sein.

Im besonderen ist der Kunststoff-Bereich der Abgasanlage ein einziges komplexes Kunststoff-Formteil, welches vorzugsweise der Geometrie eines Fahrzeug-Unterbodens angepaßt ist.

Der Kunststoff-Bereich kann mehrere Einzelkomponenten aus Kunststoff aufweisen, insbesondere Rohre, Schalldämpfer und/oder Halter für eine Befestigung der Abgasanlage vorzugsweise an einem Fahrzeug.

Die Einzelkomponenten können durch Verbindungstechniken wie Kleben, Stecken, Kunststoffschweißen und/oder Klemmen oder durch Verbindungsvorrichtungen wie Klammern und/oder Schellen miteinander verbunden sein.

Der Kunststoff-Bereich der Abgasanlage kann für eine gute Schalldämpfung Dämm-Material aus Kunststoff aufweisen.

Der Motor kann ein stationäres Antriebsaggregat oder ein Fahrzeug-Antriebsaggregat sein.

Mit Vorzug ist der Motor ein Dieselmotor mit niedriger Abgastemperatur, so daß gegebenenfalls die gesamte Abgasanlage aus Kunststoff ausgebildet werden kann, und zwar ohne Vorordnung einer vorgenannte Reduzier-Einrichtung bzw. eines Abgastemperaturkühlers.

Der Motor kann aber auch ein Brennstoffzellen-Motor, insbesondere ein Wasserstoffmotor, sein. Dann werden Brennstoffzellen als Antrieb und insbesondere Wasserstoff als Energieträger genutzt.

Durch die Erfindung wird also je nach Art, Größe und Leistung des verwendeten Motors ohne Abgasabkühlung oder gegebenenfalls mit Abkühlung des Abgases auf einen Kunststoffverträglichen Temperaturwert der Einsatz einer Kunststoff-Abgasanlage ganz oder teilweise ermöglicht. Die Abkühlung erfolgt durch Abgaskühler mittels Luftstrom mit einer Wärmeabführung vorzugsweise in die Atmosphäre oder durch Wärmetauscher mittels Kühlmittel mit einer Wärmerückgewinnung bzw. Wärmerückführung in ein anderes Betriebssystem, insbesondere eine Stand- oder Zusatzheizung eines Kraftfahrzeuges für eine Beheizung eines Fahrzeuginnenraumes. Die Verwendung von Kunststoff bei einer Abgasanlage anstelle von Blech bedeutet Gewichtsersparnis, Einsparung von Materialkosten, Werkzeugkosten und insbesondere keine Korrosion. Entsprechend hoch ist dann die Lebensdauer der Abgasanlage. Die Abgasanlage läßt sich durch Kunststoff problemlos filigran ausbilden, wobei komplexe Geometrien realisiert werden können. Dämm-Material kann ebenfalls aus Kunststoff ausgebildet werden, insbesondere als Recyclingmaterial.

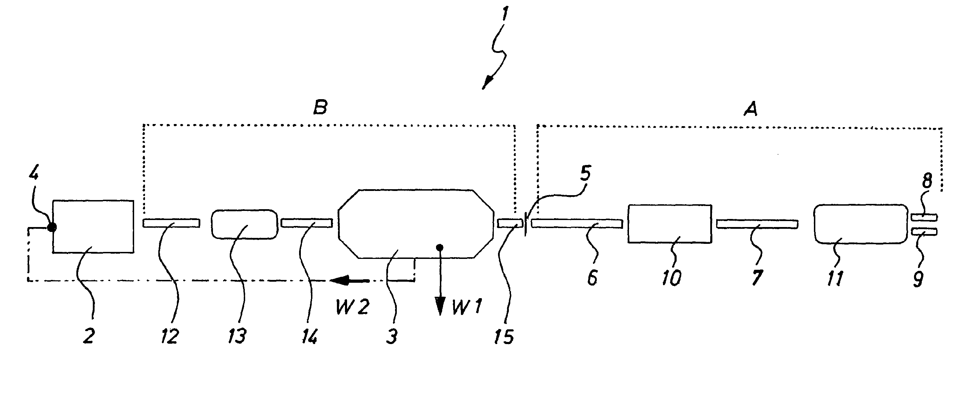

Die Erfindung wird nachfolgend anhand eines Ausführungsbeispiels unter Bezugnahme auf die beigefügte Zeichnung näher erläutert.

Die einzige Figur der Zeichnung zeigt schematisch die Bauteile einer Abgasanlage in einer Nachordnung zu einem Verbrennungsmotor eines Kraftfahrzeuges vor einem Zusammenbau.

Die Abgasanlage 1 des Motors 2 umfaßt in einer unmittelbaren Nachordnung zum Motor 2 einen Bereich B aus Blechformteilen bestehend aus einem Krümmer 12, einem Katalysator 13, einem Verbindungsrohr 14 und einem Wärmetauscher 3 mit einem Endrohr 15, der den Abgastrom abkühlt.

Die im Wärmetauscher gewonnene Wärme W2 wird zum Motor 2 rückgeführt, wie dies strichpunktiert dargestellt ist, und für eine Stand- oder Zusatzheizung 4 des Kraftfahrzeugs verwendet.

Anstelle des Wärmetauschers 3, der Wärme W2 rückführt, kann auch ein Abgaskühler vorgesehen sein, der die Wärme W1 durch Luftstrom in die Atmosphäre abführt.

Die Abgasanlage 1 des Motors 2 umfaßt ferner in Nachordnung zum vorgenannten Bereich B einen Bereich A ganz oder teilweise aus Kunststoff, bestehend aus Einzelkomponenten der Abgasanlage, nämlich aus einem Anschlußrohr 6, einem Schalldämpfer 10, einem weiteren Verbindungsrohr 7, einem Nachschalldämpfer 11, sowie aus zwei parallelen Endrohren 8 und 9.

Das Anschlußrohr 6 weist eingangsseitig eine Flanschverbindung 5 mit Radialflansch und Verschraubung in Ausrichtung zum Austrittsende des Endrohrs 15 des Wärmetauschers 3 auf.

Die Flanschverbindung 5 kann auch eine Steckverbindung mit Schelle sein.

Die Rohre 6, 7, 8 und 9, die Schalldämpfer 10, 11, sowie nicht dargestellte Halter für eine Befestigung der Abgasanlage 1 am Fahrzeugunterboden sind durch Kleben, Stecken, Klemmen oder Kunststoffschweißen verbunden. Die Einzelkomponenten sind der Geometrie des Fahrzeug-Unterbodens angepaßt.

Der Kunststoff-Bereich A der Abgasanlage 1 kann auch ein einstückiges komplexes Kunststoff-Formteil sein, welches der Geometrie des Fahrzeug-Unterbodens angepaßt ist.

## Patentansprüche

1. Abgasanlage (1) eines Motors (2), vorzugsweise eines Verbrennungsmotors eines Kraftfahrzeuges,
**dadurch gekennzeichnet,**
**daß** zumindest ein Bereich (A) der Abgasanlage (1) aus Kunststoff gebildet ist.

2. Abgasanlage nach Anspruch 1,
**dadurch gekennzeichnet,**
**daß** der vom Motor entfernte hintere Bereich der Abgasanlage aus Kunststoff gebildet ist.

3. Abgasanlage nach Anspruch 1 oder 2,
**dadurch gekennzeichnet,**
**daß** dem Kunststoff-Bereich (A) der Abgasanlage (1) eine Reduzier-Einrichtung zur Herabsetzung der Abgastemperatur vorgeordnet ist.

4. Abgasanlage nach Anspruch 3,
**dadurch gekennzeichnet,**
**daß** die Reduzier-Einrichtung ein Abgastemperaturkühler ist.

5. Abgasanlage nach Anspruch 3,
**dadurch gekennzeichnet,**
**daß** die Reduzier-Einrichtung ein Wärmetauscher (3) ist, der die Abgaswärme für ein Betriebssystem nutzt.

6. Abgasanlage nach Anspruch 5,
**dadurch gekennzeichnet,**
**daß** das Betriebssystem eine Zusatzheizung (4) vorzugsweise eines Kraftfahrzeuges ist.

7. Abgasanlage nach einem der Ansprüche 1 bis 6,
**dadurch gekennzeichnet,**
**daß** der Kunststoff-Bereich (A) der Abgasanlage (1) über eine abgasdichte Flanschverbindung (5) mit dem Motor (2) oder einem motornahen vorderen metallenen Abgasbereich (B) der Abgasanlage (1) verbunden ist.

8. Abgasanlage nach einem der Ansprüche 1 bis 7,
**dadurch gekennzeichnet,**
**daß** der Kunststoff-Bereich (A) der Abgasanlage (1) ein einziges komplexes Kunststoff-Formteil ist, welches vorzugsweise der Geometrie eines Fahrzeug-Unterbodens angepaßt ist.

9. Abgasanlage nach einem der Ansprüche 1 bis 7,
**dadurch gekennzeichnet,**
**daß** der Kunststoff-Bereich (A) Einzelkomponenten aus Kunststoff aufweist, insbesondere Rohre (6, 7, 8, 9), Schalldämpfer (10, 11) und/oder Halter für eine Befestigung der Abgasanlage (1) vorzugsweise an einem Fahrzeug.

10. Abgasanlage nach Anspruch 9,
**dadurch gekennzeichnet,**
**daß** die Einzelkomponenten durch Kleben, Stecken, Kunststoffschweißen, Klemmen und/oder Schellen miteinander verbunden sind.

11. Abgasanlage nach einem der Ansprüche 1 bis 10,
**dadurch gekennzeichnet,**
**daß** der Kunststoff-Bereich (A) der Abgasanlage (1) Dämm-Material aus Kunststoff aufweist.

12. Abgasanlage nach einem der Ansprüche 1 bis 11,
**dadurch gekennzeichnet,**
**daß** der Motor (2) ein Dieselmotor ist.

13. Abgasanlage nach einem der Ansprüche 1 bis 11,
**dadurch gekennzeichnet,**
**daß** der Motor (2) ein Brennstoffzellen-Motor, insbesondere ein Wasserstoffmotor, ist.
